# EUROPÄISCHE PATENTSCHRIFT

(11) **EP 2 267 213 B1**
(45) Veröffentlichungstag und Bekanntmachung des Hinweises auf die Patenterteilung: **06.07.2016**
(21) Anmeldenummer: 10004093.0
(22) Anmeldetag: 16.04.2010
(51) Int. Cl.: D06F 58/10, D06F 58/14, D06F 58/20

(54) **Schranktrockner mit Wärmepumpe**
Dryer cabinet with heat pump
Armoire sèche-linge avec pompe à chaleur

(30) Priorität: 28.01.2010 EP 10000848
(43) Veröffentlichungstag der Anmeldung: 29.12.2010
(73) Patentinhaber: V-Zug AG, CH-6301 Zug (CH)
(72) Erfinder: Werner, Juerg, 8908 Hedingen (CH); Dober, Ernst, 6036 Dierikon (CH); Honegger, Adrian, 6004 Luzern (CH)
(74) Vertreter: Sutter, Kurt

(56) Entgegenhaltungen:
- EP-A1- 0 997 573
- WO-A2-2009/064143
- CH-A5- 597 822
- FR-A1- 2 919 628
- US-A1- 2003 126 691
- US-A1- 2005 016 012

## Beschreibung

### Gebiet der Erfindung

Die Erfindung betrifft einen Schranktrockner zum Trocknen von Wäsche sowie ein Verfahren zum Betrieb eines solchen Schranktrockners.

### Hintergrund

Schranktrockner zum Trocknen oder Aufbereiten der Wäsche sind grundsätzlich bekannt. Sie besitzen in der Regel einen Nutzraum zur Aufnahme der Wäsche und Mittel, um trockene, erwärmte Luft in den Schrank einzublasen.

In FR 2 919 628 und WO 2009/065153 sind Geräte beschrieben, bei denen die Wäsche mit Dampf beaufschlagt werden kann. Zudem wird vorgeschlagen, die Wäsche mit Kleiderbügeln im Schrank aufzuhängen.

### Darstellung der Erfindung

Aufgabe der vorliegenden Erfindung ist es, einen Schranktrockner bereitzustellen, welcher gute Behandlungsresultate erbringt. Diese Aufgabe wird von Anspruch 1 erfüllt.

Demgemäss besitzt der Schranktrockner eine Kühl- und eine Heizvorrichtung und einen Prozesskreislauf, um die Prozessluft in einem geschlossenen Kreislauf durch den Nutzraum und an der Kühlvorrichtung und der Heizvorrichtung vorbei zu führen. Dadurch wird die Luft getrocknet und erwärmt. Weiter ist eine Wärmepumpe vorgesehen, um in Energie sparender Weise die Heizvorrichtung zu heizen und die Kühlvorrichtung zu kühlen. Schliesslich ist der Schranktrockner auch mit einem Dampfgenerator ausgestattet. Die Verwendung eines Dampfgenerators, welche auf den ersten Blick an sich der Trocknung der Prozessluft mittels Kühlvorrichtung und Heizvorrichtung widerspricht, hat den Vorteil, dass die Wäsche angefeuchtet werden kann, um so Knitterbildung zu vermeiden und/oder eine gezielte Hygienisierung zu bewirken. Die Atmosphäre wird vorzugsweise mit einem Klimasensor geregelt.

Vorzugsweise weisen die Aufhängemittel Prozessluftkanäle auf, welche an den Prozessluftkreislauf angeschlossen werden können oder an diesem angeschlossen sind. Die Prozessluftkanäle sind so ausgestaltet, dass sie in der Lage sind, Prozessluft mit oder ohne Dampf in die Wäsche hinein zu fördern. Dadurch kann die Wäsche gleichmässiger getrocknet werden.

Erfindungsgemäss umfassen die Aufhängemittel mindestens einen Kleiderbügel, der an einer Aufhängung im Schrank aufgehängt werden kann. Die Aufhängung, welche beispielsweise als Kleiderstange ausgestaltet sein kann, weist eine mit dem Prozessluftkreislauf verbundene Prozessluftkreislaufmündung auf. Auf diese Weise kann die Prozessluft über die Aufhängung in den Nutzraum und/oder in die Kleiderbügel eingeblasen werden. Vorzugsweise können dabei die Luftkanäle in den Kleiderbügeln mit dem Prozessluftkreislaufmündungen verbunden werden, so dass Prozessluft in die Kleiderbügel eingeblasen werden kann.

Die Erfindung betrifft auch ein Verfahren zum Betrieb eines solchen Schranktrockners, bei welchem die Prozessluft mit einer derartigen Strömungsgeschwindigkeit in den Nutzraum 1 eingeleitet wird, dass die Wäsche zu flattern beginnt. Dadurch wird die Knitterbildung weiter reduziert und die Trocknungswirkung verbessert.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch eine Ausgestaltung eines Schranktrockners und
Fig. 2 einen Schnitt durch eine Ausgestaltung eines Kleiderbügels.

### Wege zur Ausführung der Erfindung

### Schranktrockner:

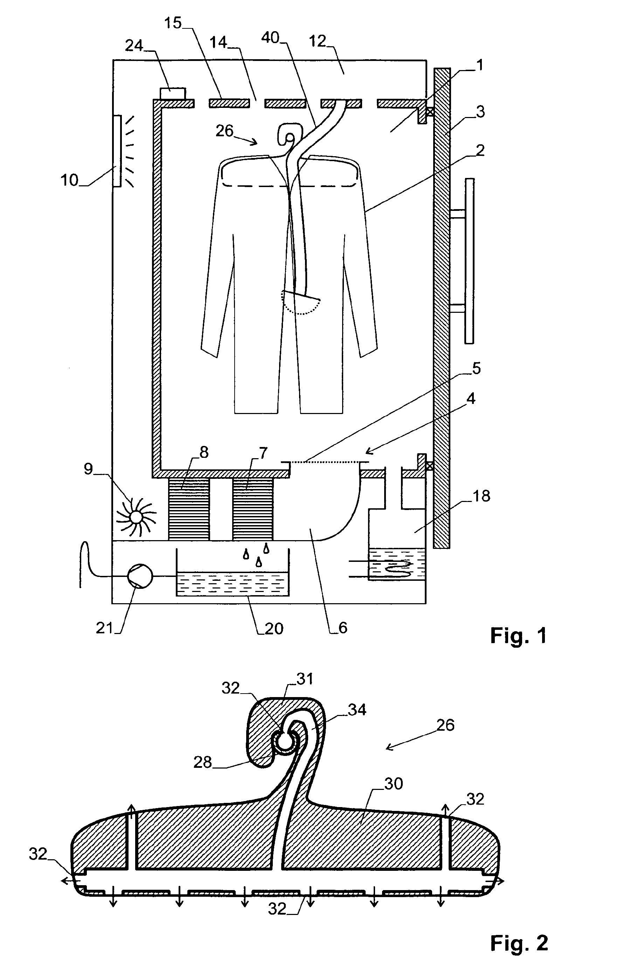

Fig. 1 zeigt einen Schnitt durch einen Schranktrockner mit einem Nutzraum 1 zur Aufnahme der Wäsche 2. Der Nutzraum 1 wird vorderseitig von einer Türe 3 verschlossen. Im Bodenbereich des Nutzraums befindet sich eine Öffnung 4, in welcher ein Filter 5 angeordnet ist, um Flusen zurückzuhalten. An die Öffnung 4 schliesst ein Prozessluftkanal 6 an, in welchem die Prozessluft über eine Kühlvorrichtung 7, eine Heizvorrichtung 8, einen Ventilator 9, vorbei an einer UV-Lichtquelle 10 in einen Deckenbereich 12 des Geräts geführt wird. Der Deckenbereich 12 ist über Öffnungen 14 in der Decke 15 des Nutzraums 1 mit dem Nutzraum 1 verbunden.

Weiter besitzt das Gerät einen Dampfgenerator 18 zum Einführen von Dampf in die Prozessluft. In der vorliegenden Ausführung ist der Dampfgenerator 18 so angeordnet, dass er Dampf von unten in den Nutzraum einleitet, so dass der Dampf (der wärmer als die Prozessluft ist) nach oben durch die Wäsche steigen kann. Mit dem Dampf werden das Gerät und die Textilien vorzugsweise auf mindestens 70°C erhitzt und so hygienisiert. Durch das Erwärmen in Verbindung mit dem Luftstrom werden die Knitter entfernt. Von besonderem Vorteil ist die Dampfbehandlung bei trockenen Textilien, da die leichte Befeuchtung und Erwärmung durch den Dampf das Entknittern stark verbessert und einen weiteren Beitrag zum Auffrischen leistet.

Unterhalb der Kühlvorrichtung 7 befindet sich ein Auffangbecken 20 zum Auffangen von auskondensiertem Wasser. Von dort kann das Wasser automatisch über eine Pumpvorrichtung 21 oder manuell entleert werden.

Das beschriebene Gerät bildet einen im Wesentlichen geschlossenen Prozessluftkreislauf, in welchem Prozessluft durch den Nutzraum 1, das Filter 5, die Kühlvorrichtung 7, die Heizvorrichtung 8, vorbei an der UV-Lichtquelle 10 und über die Decke 14 wieder zurück in den Nutzraum 1 geführt wird.

Dabei werden im Filter 5 Flusen entfernt, die insbesondere die als Wärmetauscher ausgestalteten Kühlund Heizvorrichtungen 7 bzw. 8 verunreinigen könnten.

In der Kühlvorrichtung 7 wird die Luft abgekühlt um Feuchte auszukondensieren. Danach wird die Luft in der Heizvorrichtung 8 wieder erwärmt, so dass sie neue Feuchtigkeit aufnehmen kann.

Die Kühlvorrichtung 7 und die Heizvorrichtung 8 werden von einer Wärmepumpe betrieben (nicht gezeigt). Dabei ist der Kondensator der Wärmepumpe thermisch mit der Heizvorrichtung 8 gekoppelt und der Verdampfer mit der Kühlvorrichtung 7.

Der Ventilator 9 dient dazu, die Luft durch den Prozessluftkreislauf umzuwälzen.

Die UV-Lichtquelle 10 baut organische Verbindungen ab, entweder direkt oder über eine Ozonbildung. UV-Strahlung bei 185 nm erzeugt Ozon aus dem Sauerstoff der Prozessluft. Oxidierbare Laststoffe werden auf diese Weise abgebaut und dauerhaft neutralisiert. Erzeugt die UV-Lichtquelle Licht mit einer Wellenlänge von z.B. 254 nm, so schädigt sie die DNA von Zellen und Keimen.

Anstelle der oder zusätzlich zur UV-Lichtquelle kann auch ein Ozongenerator vorgesehen sein, der Ozon beispielsweise über hohe elektrische Felder erzeugt.

Vorzugsweise ist der UV-Lichtquelle bzw. dem Ozongenerator ein Sensor nachgeschaltet, der die Ozonkonzentration misst und so regelt, dass sie einen vorgegebenen Wert nicht übersteigt.

Weiter besitzt der Schranktrockner vorzugsweise einen Duftspender 24 zur Abgabe von Duftstoffen. Dabei kann es sich in einer einfachen Ausführung z.B. um ein saugfähiges Material handeln, welches mit einem Duftstoff, beispielsweise einem ätherischen Öl, getränkt ist. Denkbar ist jedoch z.B. auch ein geheizter Verdampfer oder eine Sprühvorrichtung. Der Duftspender 24 kann so angeordnet sein, dass er ein Parfüm direkt in den Nutzraum 1 abgibt, oder er kann es auch in den Prozessluftkanal 6 abgeben, vorzugsweise nach der UV-Lichtquelle 10 bzw. dem Ozongenerator.

Vorzugsweise ist der Prozessluftkreislauf so ausgestaltet, dass er mindestens einen Teil der Prozessluft von oben in den Nutzraum 1 einleitet. Dies geschieht in der Ausführung nach Fig. 1 über die Öffnungen 14.

Um die Knitterbildung weiter zu reduzieren und die Trocknung zu verbessern, wird die Prozessluft vorzugsweise mit einer derartigen Strömungsgeschwindigkeit in den Nutzraum 1 eingeleitet, dass die Wäsche zu flattern beginnt. Von Vorteil wird die Luftgeschwindigkeit in einem Bereich von 2 .. 10m/s eingestellt.

Vorzugsweise ist der Nutzraum 1 über eine kleine Öffnung permanent mit der Umgebung verbunden, so dass der Druck im Innern des Nutzraums im Wesentlichen dem Umgebungsdruck entspricht, so dass die Türe 3 einfach geöffnet und geschlossen werden kann. Die übrigen Teile des Prozessluftkreislaufs sind hingegen nicht mit der Umgebung verbunden.

### Mittel zum Abbauen von Geruchsstoffen

In einer bevorzugten Ausführung besitzt der Schranktrockner Mittel zum Abbauen von Geruchsstoffen, wie sie z.B. durch Bakterien gebildet werden.

Dabei kann es sich beispielsweise um Mittel zum Beimischen von Enzymen handeln, mit denen Geruchsstoffe abgebaut werden. Geeignete Enzyme sind beispielsweise Hydrolasen, insbesondere Esterasen, oder Oxireduktasen. Entweder wird die Prozessluft durch ein mit den o.g. Enzymen versetztes Trägermaterial hindurchgeführt, oder eine in Wasser fein verteilte Enzymmischung wird dem Prozessluftstrom zugeführt.

Alternativ oder zusätzlich hierzu kann auch ein Photokatalysator und eine Lichtquelle zum Aktivieren des Photokatalysator vorgesehen sein, wie z.B. ein Photokatalysator umfassend TiO₂. Der Benutzer kann die Mittel zum Abbauen von Geruchsstoffen optional durch eine Funktion auf dem Bedienpanel steuern.

Unter "Photokatalysator" wird ein Stoff verstanden, der bei Beleuchtung mit Licht geeigneter Wellenlänge, insbesondere sichtbarem oder ultraviolettem Licht, als Katalysator wirkt.

Der Photokatalysator ist vorzugsweise ein Katalysator auf der Basis von Titanoxid, d.h. ein Katalysator, der z.B. TiO₂ (Titandioxid) enthält, denkbar sind beispielsweise jedoch auch Katalysatoren basierend auf CdS (Kadmiumsulfid), WO₃ (Wolframoxid) oder ZO (Zinkoxid). Geeignete Fotokatalysatoren sind beispielsweise in DE 20 2004 005 677 U1 und EP 1 205 244 beschrieben. Sie erzeugen bei Lichtabsorption Elektronen und Löcher und induzieren dadurch chemische Reaktionen, welche organische Verbindungen abbauen und Mikroorganismen und Viren abzutöten vermögen. Besonders bevorzugt sind Katalysatoren auf der Basis von Titandioxid aufgrund der hohen Effizienz und biologischen Verträglichkeit dieses Materials.

Beispielsweise kann als Fotokatalysator das Produkt "Titan Shield^{®}" eingesetzt werden.

Denkbar ist ein Abbau von Geruchsstoffen auch mittels Oxidation, z.B. durch Zugabe von Ozon oder durch UV-Bestrahlung.

Aufhängemittel:
Um die Wäsche im Nutraum 1 aufzuhängen, sind Aufhängemittel 26 vorgesehen, wie sie beispielsweise in Fig. 2 dargestellt sind. Diese Aufhängemittel sind vorzugsweise so ausgestaltet, dass sie einen Teil der Prozessluft in die Wäsche hinein fördern.

In der Ausführung nach Fig. 2 umfassen die Aufhängemittel eine Aufhängung in Form einer Kleiderstange 28, welche sich horizontal im oberen Bereich des Nutzraums durch diesen erstreckt und an der ein oder mehrere Kleiderbügel 30 aufgehängt sind. Hierzu ist jeder Kleiderbügel 30 mit einem entsprechenden Haken 31 ausgestattet.

Die Kleiderstange 28 ist hohl ausgeführt und mit dem Deckenbereich 12 des Prozessluftkanals 6 verbunden, so dass Prozessluft in sie einströmt. Weiter sind an der Kleiderstange 28 Prozessluftkreislaufmündungen 32 angeordnet, durch welche die Prozessluft austreten kann. Mindestens ein Teil der Prozessluftkreislaufmündungen 32 ist an der Oberseite der Kleiderstange 28 angeordnet.

Durch die Kleiderbügel 30 erstrecken sich Luftkanäle 34, welche an den Prozessluftkreislauf angeschlossen werden können, um Prozessluft in die Wäsche zu fördern. In der Ausführung nach Fig. 2 können die Luftkanäle 34 an den Prozessluftkreislaufmündungen 32 angeschlossen werden. Hierzu münden die Luftkanäle 34 an der Unterseite der Haken 31 der Kleiderbügel 30, so dass durch Aufhängen der Kleiderbügel 30 an der Kleiderstange 28 die Luftkanäle 34 mit dem Prozessluftkreislauf verbunden werden können.

Die Luftkanäle 34 sind mit einer Vielzahl von Öffnungen 32 an der Aussenseite der Kleiderbügel 30 verbunden, so dass die von der Kleiderstange 28 in sie eintretende Prozessluft in die Wäsche geleitet werden kann, beispielsweise in Ärmel und Hosenbeine.

Die Form der Luftkanäle 34 kann variieren. Sie können verglichen mit dem Körper des Kleiderbügels 30 dünn sein, oder der Kleiderbügel 30 kann z.B. als Hohlkörper mit dünner, perforierter Aussenwand ausgestaltet sein, dessen ganzes Inneres einen Luftkanal bildet.

Anstelle von oder zusätzlich zu den Kleiderbügeln 30 können die Aufhängemittel auch noch andere Strukturen enthalten, an denen Wäsche aufgehängt werden kann. Beispielsweise seien Klammervorrichtungen oder von der Prozessluft aufblasbare, perforierte Ganz- oder Teilkörperformen genannt. Auch diese Strukturen können Luftkanäle enthalten, um die Prozessluft in die Wäsche einzuleiten.

Vorzugsweise sind die Aufhängemittel so ausgestaltet, dass sie auch dazu geeignet sind, die Wäsche in einem normalen Kleiderschrank zu halten, weshalb eine Ausführung als Kleiderbügel besonders vorteilhaft ist. Durch die Verwendung derartiger Aufhängemittel wird die Handhabung für den Benutzer vereinfacht.

Die Aufhängemittel halten die Wäsche vorzugsweise derart, dass sie gut von der Prozessluft beströmt werden kann.

Zur Reduktion der Knitterbildung können die Aufhängemittel auch so ausgestaltet sein, dass sie die Wäsche strecken, beispielsweise durch Gewichte, Federmittel oder aufblasbare Ballonkörper.

Weiter können die Aufhängemittel auch dazu ausgestaltet sein, die Wäschestücke nach oben offen zu halten, so dass die von oben in den Nutzraum 1 einströmende Prozessluft direkt in die Wäschestücke eintreten kann.

Weiter können flexible Schläuche 40 vorgesehen sein (vgl. Fig. 1), mit denen Prozessluft in die Wäsche eingeblasen werden kann. Diese Schläuche können z.B. direkt und lose in die Wäsche eingeführt werden, so wie in Fig. 1 dargestellt, oder sie können Teil der Aufhängemittel 26 bilden.

### Bemerkungen:

Der hier beschriebene Schranktrockner kann zum Trocknen oder auch zum Aufbereiten von Wäsche verwendet werden. Unter "Aufbereiten" ist dabei nicht notwendigerweise ein Wasserentzug zu verstehen, sondern z.B. auch eine Hygienisierung und/oder Entknitterung (z.B. mittels Dampf bzw. UV- oder Ozongenerator) oder die Neutralisierung von Gerüchen (z.B. mit Hilfe der erwähnten Mitteln zum Beimischen von Enzymen oder mit dem UV- bzw. Ozongenerator).

Im Vergleich zu Wäschetumblern haben Trockenschränke verschiedene Vorteile. Beispielsweise entfällt der Antrieb für die Wäschetrommel. Ein einfaches, grossflächiges Flusensieb genügt, weil die Wäsche nicht gewalkt wird. Der Luftstrom wird nicht gehemmt durch mehrstufige Filter. Die Wäsche hängt frei im isolierten Schrank und wird mit trockener Luft rundum angeströmt. Dadurch trocknet sie schneller als im Wäschetumbler und wird mechanisch weniger beansprucht. Die Knitterbildung ist gering, wodurch das Bügeln entfallen kann oder zumindest einfacher wird, was eine weitere Zeit- und Energieeinsparung mit sich bringt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Schranktrockner zum Trocknen von Wäsche mit
einem Nutzraum (1) zur Aufnahme der Wäsche,
einer Kühlvorrichtung (7) und einer Heizvorrichtung (8),
einem Prozessluftkreislauf, um Prozessluft in einem geschlossenen Kreislauf durch den Nutzraum (1) und an die Kühlvorrichtung (7) und die Heizvorrichtung (8) zu führen,
einer Wärmepumpe zum Kühlen der Kühlvorrichtung (7) und zum Heizen der Heizvorrichtung (8),
Aufhängemittel (26) zum Aufhängen der Wäsche im Nutzraum (1) und
einem Dampfgenerator (18) zum Einführen von Dampf in die Prozessluft,
wobei die Aufhängemittel (26) mindestens einen Kleiderbügel (30) aufweisen, der an einer Aufhängung (28) im Nutzraum (1) aufhängbar ist, **dadurch gekennzeichnet, dass** die Aufhängung (28) mindestens eine mit dem Prozessluftkreislauf verbundene Prozessluftkreislaufmündung (32) aufweist.

2. Schranktrockner nach Anspruch 1, welcher eine UV-Lichtquelle (10) und/oder einen Ozongenerator aufweist.

3. Schranktrockner nach einem der vorangehenden Ansprüche, welcher einen Duftspender (24) zur Abgabe eines Duftstoffs an die Prozessluft aufweist.

4. Schranktrockner nach einem der vorangehenden Ansprüche, wobei der Prozessluftkreislauf dazu ausgestaltet ist, mindestens einen Teil der Prozessluft von oben in den Nutzraum (1) einzuleiten.

5. Schranktrockner nach Anspruch 4, wobei in einer Decke (15) des Nutzraums (1) eine Vielzahl von Öffnungen (14) für die einströmende Prozessluft vorgesehen ist.

6. Schranktrockner nach einem der vorangehenden Ansprüche, wobei der Dampfgenerator (18) dazu ausgestaltet ist, Dampf von unten in den Nutzraum (1) einzuleiten.

7. Schranktrockner nach einem der vorangehenden Ansprüche, wobei die Aufhängemittel (26) Luftkanäle (34) aufweisen, welche an den Prozessluftkreislauf anschliessbar sind, um Prozessluft mit oder ohne Dampf in die Wäsche zu fördern.

8. Schranktrockner nach Anspruch 7, wobei die Luftkanäle (34) an die Prozessluftkreislaufmündung bzw. - mündungen (32) anschliessbar sind.

9. Schranktrockner nach Anspruch 8, wobei mindestens ein Teil der Prozessluftkreislaufmündungen jeweils an einer Oberseite der Aufhängung (28) angeordnet sind, und wobei mindesteins einige der Luftkanäle (34) an einer Unterseite eines in der Aufhängung (28) einhängbaren Hakens der Kleiderbügel (30) münden, derart, dass durch Aufhängen der Kleiderbügel (30) an der Aufhängung (28) die Luftkanäle (34) mit dem Prozessluftkreislauf verbindbar sind.

10. Schranktrockner nach einem der vorangehenden Ansprüche, mit flexiblen Schläuchen (40), über welche Prozessluft in die Wäsche einblasbar ist.

11. Schranktrockner nach einem der vorangehenden Ansprüche, wobei er Mittel zum Abbauen von Geruchsstoffen in der Prozessluft aufweist.

12. Schranktrockner nach Anspruch 11, wobei die Mittel zum Abbauen von Geruchsstoffen in der Prozesslüft umfassen:
Mittel zum Beimischen von Enzymen zum Abbau von Geruchsstoffen, insbesondere Hydrolasen oder Oxireduktasen, aufweisen,
und/oder einen Photokatalysator und eine Lichtquelle zum Aktivieren des Photokatalysators, insbesondere wobei der Photokatalysator TiO₂ aufweist.

13. Schranktrockner nach einem der vorangehenden Ansprüche, wobei der Nutzraum über eine Öffnung permanent mit der Umgebung verbunden ist, so dass ein Druck im Nutzraum einem Umgebungsdruck entspricht.

14. Verfahren zum Betrieb des Schranktrockners nach einem der vorangehenden Ansprüche, wobei die Prozessluft mit einer derartigen Strömungsgeschwindigkeit in den Nutzraum (1) eingeleitet wird, dass die Wäsche zu flattern beginnt, wobei vorzugsweise die Luftgeschwindigkeit in einem Bereich von 2-10 m/s eingestellt wird.

## Claims

1. Dryer cabinet for drying laundry with
a usable chamber (1) for receiving the laundry,
a cooling device (7) and a heating device (8),
a process air circuit for guiding process air in a closed circuit through the usable chamber (1) and to the cooling device (7) and the heating device (8),
a heat pump for cooling the cooling device (7) and for heating the heating device (8),
suspension means (26) for suspending the laundry in the usable chamber (1) and
a steam generator (18) for introducing steam into the process air,
wherein the suspension means (26) have at least a clothes hanger (30) which can be hung from a suspension (28)inside the usable chamber (1), **characterized in that** the suspension (28) has at least a process air circuit opening (32) connected to the process air circuit.

2. Dryer cabinet according to claim 1 having a UV light source (10) and/or an ozone generator.

3. Dryer cabinet according to one of the preceding claims having a fragrance dispenser (24) for releasing a fragrance to the process air.

4. Dryer cabinet according to one of the preceding claims, wherein the process air circuit is adapted to introduce at least a part of the process air into the usable chamber (1) from the top.

5. Dryer cabinet according to claim 4, wherein a plurality of openings (14) for the inflowing process air is provided in a cover (15) of the usable space (1).

6. Dryer cabinet according to one of the preceding claims, wherein the steam generator (18) is adapted to introduce steam into the usable space (1) from the bottom.

7. Dryer cabinet according to one of the preceding claims, wherein the suspension means (26) have air channels (34) which are connectable to the process air circuit in order to transport process air with or without steam into the laundry.

8. Dryer cabinet according to claim 7, wherein the air channels (34) are connectable to the process air circuit opening or openings (32), respectively.

9. Dryer cabinet according to claim 8, wherein at least a part of the process air circuit openings is arranged on an upper side of the suspension (28), and wherein at least some of the air channels (34) open on a bottom side of a hook of the clothes hangers (30) which is suspended in the suspension (28) in such a way that the air channels (34) are connectable to the process air circuit by suspending the clothes hangers (30) from the suspension (28).

10. Dryer cabinet according to one of the preceding claims, with flexible tubes (40), via which process air is blown into the laundry.

11. Dryer cabinet according to one of the preceding claims, wherein it has means for reducing odorous substances in the process air.

12. Dryer cabinet according to claim 11,
wherein the means for reducing odorous substances in the process air comprise:
means for adding enzymes for reducing odorous substances, particularly hydrolases or oxidoreductases,
and/or a photocatalyst and a light source for activating the photocatalyst, particularly wherein the photocatalyst has TiO₂.

13. Dryer cabinet according to one of the preceding claims, wherein the usable chamber is permanently connected to the environment via an opening, such that a pressure inside the usable space corresponds to an environment pressure.

14. Method for operating the dryer cabinet according to one of the preceding claims, wherein the process air is introduced into the usable chamber (1) with such a flow speed that the water starts fluttering, wherein preferably the air speed is adjusted in a range between 2-10 m/s.

## Revendications

1. Armoire sèche-linge pour sécher du linge avec
un espace utile (1) pour recevoir le linge, un dispositif de refroidissement (7) et un dispositif de chauffage (8),
un circuit d'air de processus pour guider de l'air de processus dans un circuit fermé à travers l'espace utile (1) et au dispositif de refroidissement (7) et au dispositif de chauffage (8),
une pompe de chaleur pour refroidir le dispositif de refroidissement (7) et pour chauffer le dispositif de chauffage (8),
des moyens de suspension (26) pour suspendre le linge dans l'espace utile (1) et
un générateur de vapeur (18) pour introduire de la vapeur dans l'air de processus,
les moyens de suspension (26) ayant au moins un cintre (30) qui peut être suspendu d'une suspension (28) à l'intérieur de l'espace utile (1), **caractérisée en ce que** la suspension (28) a au moins une ouverture (32) du circuit d'air de processus connectée au circuit d'air de processus.

2. Armoire sèche-linge selon la revendication 1, ayant une source de lumière UV (10) et/ou un générateur d'ozone.

3. Armoire sèche-linge selon l'une des revendications précédentes, ayant un diffuseur de parfum (24) pour diffuser un parfum dans l'air de processus.

4. Armoire sèche-linge selon l'une des revendications précédentes, le circuit d'air de processus étant adapté à introduire par-dessus au moins une partie de l'air de processus dans l'espace utile (1).

5. Armoire sèche-linge selon la revendication 4, une pluralité d'ouvertures (14) pour l'air de processus entrant étant prévue dans un couvercle (15) de l'espace utile (1).

6. Armoire sèche-linge selon l'une des revendications précédentes, le générateur de vapeur (18) étant adapté à introduire par dessous de la vapeur dans l'espace utile (1).

7. Armoire sèche-linge selon l'une des revendications précédentes, les moyens de suspension (26) ayant des canaux d'air (34) qui sont connectables avec le circuit d'air de processus afin de transporter de l'air de processus avec ou sans vapeur dans le linge.

8. Armoire sèche-linge selon la revendication 7, les canaux d'air (34) étant connectables avec l'ouverture (32) ou bien les ouvertures du circuit d'air de processus.

9. Armoire sèche-linge selon la revendication 8, au moins une partie des ouvertures du circuit d'air de processus étant arrangée chaque sur une partie supérieure de la suspension (28), et au moins quelques-unes des canaux d'air (34) s'ouvrant d'un côté bas d'un crochet des cintres (30), qui est suspendu dans la suspension (28) de sorte que les canaux d'air (34) soient connectables au circuit d'air de processus en suspendant les cintres (30) de la suspension (28).

10. Armoire sèche-linge selon l'une des revendications précédentes, avec des tubes flexibles (40), par lesquels de l'air de processus est soufflé dans le linge.

11. Armoire sèche-linge selon l'une des revendications précédentes, ayant des moyens pour réduire des substances odorantes dans l'air de processus.

12. Armoire sèche-linge selon la revendication 11, les moyens pour réduire des substances odorantes dans l'air de processus comprenant:
des moyens pour l'addition des enzymes pour réduire des substances odorantes, particulièrement des hydrolases ou des oxydoréductases,
et/ou un photo-catalyseur et une source de lumière pour activer le photo-catalyseur, particulièrement le photo-catalyseur ayant du TiO₂.

13. Armoire sèche-linge selon l'une des revendications précédentes, l'espace utile étant permanemment connecté avec l'environnement par une ouverture, de sorte qu'une pression à l'intérieur de l'espace utile correspond avec une pression d'environnement.

14. Procédé pour opérer l'armoire sèche-linge selon l'une des revendications précédentes, l'air de processus étant introduit dans l'espace utile (1) avec une vitesse d'écoulement telle que l'eau commence à trembler, préférablement la vitesse d'air étant ajustée dans une gamme comprise entre 2 et 10 m/s.
